Europäisches Patentamt

(19) European Patent Office

Office européen des brevets

(11) Publication number: **0 036 367**
**A1**

(12) # EUROPEAN PATENT APPLICATION

(21) Application number: **81400390.1**

(22) Date of filing: **13.03.81**

(51) Int. Cl.³: **B 60 T 11/16**

(30) Priority: **17.03.80 US 130671**

(43) Date of publication of application:
**23.09.81 Bulletin 81/38**

(84) Designated Contracting States:
**DE FR GB IT**

(71) Applicant: **THE BENDIX CORPORATION**
**Executive Offices Bendix Center**
**Southfield, Michigan 48037(US)**

(72) Inventor: **Gaiser, Robert F.**
**5843 Ponderosa Drive**
**Stevensville Michigan 49127(US)**

(74) Representative: **Huchet, André et al,**
**Service Brevets Bendix 44, rue François 1er**
**F-75008 Paris(FR)**

(54) **Fast-fill master cylinder.**

(57) The master cylinder (14) comprises within a stepped bore (30) a pair of aligned pistons (74,78) which are slidingly guided by a bearing member (50) and by a sleeve (52), respectively, and which define with respective fixed seals (60,70) a pair of pressure chambers (86,88) connected to separate braking circuits (16,20) of a vehicle and normally in communication with a fluid reservoir (26).

An auxiliary, fast-fill chamber (84) is provided between the bearing member (50) and the associated piston (74), said chamber being normally in communication with the fluid reservoir (26) and separated from one (86) of the pressure chambers by one (60) of the fixed seals.

./...

EP 0 036 367 A1

## FAST - FILL MASTER CYLINDER

The present invention relates to a master cylinder of the kind comprising a pair of pistons which move past respective seals to displace pressurized fluid from a pair of pressure chambers to separate brake circuits of an automotive vehicle.

Such master cylinders are well known in the art and are illustrated, for instance, in German Patent No. 2 624 088, United States Patent No. 2 977 767, and United States Patent No. 3 946 563. They generally provide for contraction of a pressure chamber in response to movement of a piston relative to a seal. As a result the contracted pressure chamber increases fluid pressure therein to communicate the same to a brake circuit. In German Patent No. 2 624 088 for intance, only one pressure chamber is pressurized by direct displacement of the associated piston ; the primary chamber is defined by a stationary seal, whereas the secondary chamber is defined by a seal which moves with a secondary piston. Although the wall of the primary chamber need not be machined to a close tolerance, the wall of the secondary chamber requires machining to a close tolerance so that the seal associated with the secondary piston remains concentrically disposed within the secondary chamber regardless the position therein while slidably engaging the wall of the secondary chamber.

In order to dispense with a difficult and expensive machining of the housing bore, as well as to accommodate the slightly tapered housing bores obtained by die casting, Applicants have already proposed (published British Patent Application No. 2 017 240) to insert into the housing bore a sleeve which positions the seals within the bore and a bearing member which fixedly retains the sleeve within the bore, said sleeve and said bearing member being further used to guide the pistons in their displacements. Both pressure chambers are thus defined by stationary seals.

It is an essential object of the present invention to provide such a master cylinder as shown in British Application No. 2 017 240 with a fast-fill device fit to quickly take up hydraulic slack and running clearances in the brake circuits of the vehicle during initial braking.

This object is achieved, according to the teaching of this invention, and in a master cylinder of the kind comprising a housing defining a stepped bore therein and a fluid reservoir normally in communication with said bore, a pair of aligned pistons slidably disposed within the housing bore and cooperating with a pair of fixed seals, respectively, to define a pair of pressure chambers in fluid communication with respective braking circuits of a vehicle, a sleeve disposed within the housing bore and held in engagement with said pair of seals, and a bearing member extending into the housing bore to engage the sleeve in order to fixedly position same within the housing bore as well as one of said seals between said sleeve and bearing member and the other seal between said sleeve and the housing, said bearing member and said sleeve further guiding the first and the second of said pistons, respectively, in their displacements, thanks to the fact that there is provided between the bearing member and the associated first piston an auxiliary chamber which is normally communicated with the fluid reservoir and separated from one of the pressure chambers by said one seal, the pressurization of the fluid in said auxiliary chamber by the displacement of said first piston resulting first in closing the communication between this chamber and the fluid reservoir, then in opening communication between same chamber and said one pressure chamber past said one seal when the pressure level reaches a first predetermined value, and finally in re-opening communication between same chamber and the fluid reservoir when the pressure level reaches a second predetermined value. Thus the auxiliary chamber is used during initial braking to amplify the displacement of pressurized fluid in order to quickly take up hydraulic slack and running clearances in the brake circuits, and then eliminated to permit a given input force to develop higher braking pressure.

In a preferred embodiment of the invention, the communication between the auxiliary chamber and the fluid reservoir comprises at least one radially extending groove formed in an end face of the bearing member adjacent said one seal, at least one aperture formed in the sleeve, and a valve assembly fit to close said communication as soon as the pressure level in the auxiliary chamber exceeds that in the fluid reservoir and to re-open said communication when said pressure level reaches its second predetermined value. Furthermore, said one seal includes at least one lip portion directed towards said one pressure chamber, said lip portion normally resting on the outer surface of said first piston and lifting therefrom when the pressure level in the auxiliary chamber reaches its first predetermined value.

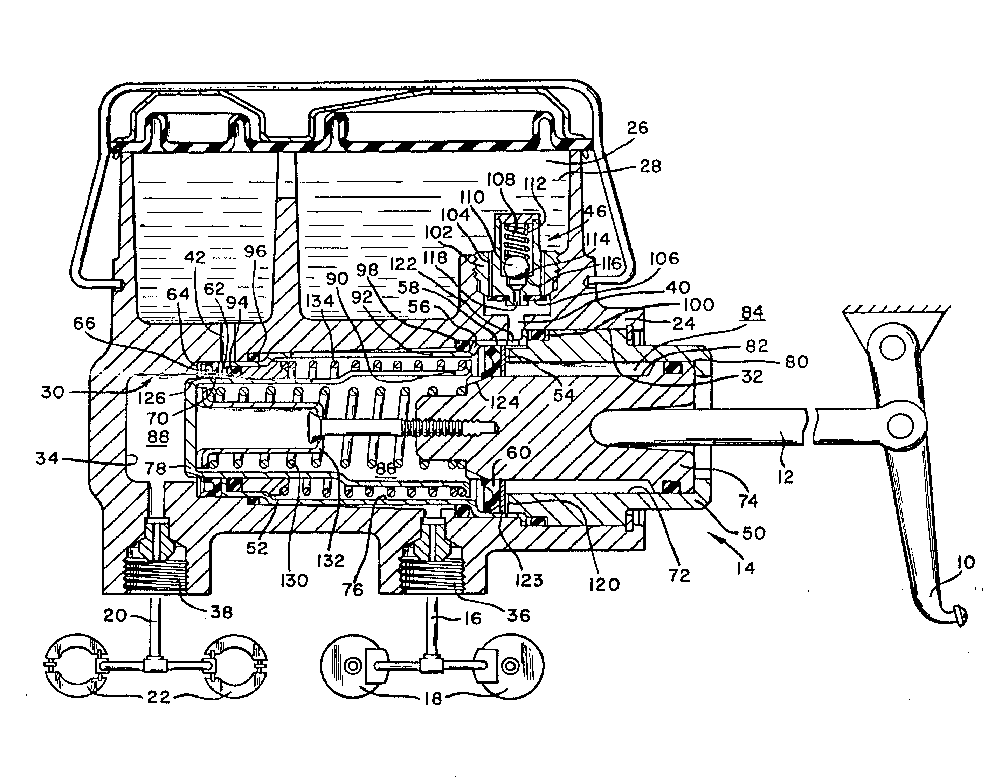

These and other advantageous features of the invention will become more readily apparent from reading the following description of a preferred embodiment, given by way of example only, and with reference to the sole figure of the drawing which is a schematic illustration of a brake system having a sectional view of a master cylinder constructed according to the present invention.

In the drawing, the brake system includes a brake pedal 10 coupled to an input rod 12 extending into the master cylinder 14. The master cylinder 14 fluidly couples to a first brake circuit 16 which leads to a front disc brake assembly 18 and also fluidly couples to a second brake circuit 20 which leads to a rear drum brake assembly 22. Upon a brake application, the pedal 10 is rotated about a fixed pivot to bias the input rod into the master cylinder. In response to the movement of the input rod, fluid pressure is generated within the master cylinder and communicated to the brake circuits 16 and 20.

The master cylinder 14 includes a housing 24 defining a reservoir 26 filled with brake fluid 28. The housing also is provided with a longitudinally extending stepped bore 30 leading from an opening 32 to a bottom wall 34. A pair of outlets 36 and 38 intersect the bore 30 and lead to the brake circuits 16 and 20, respectively, to communicate the bore with the brake circuits. A pair of compensating and replenishing ports 40 and 42 extend from the reservoir 26 to the bore 30 to communicate fluid to the latter. The compensating port 40 communicates with the reservoir 26 via a relief and replenish valve assembly 46, the operation of which will be explained later.

A bearing member 50 is disposed within the bore 30 adjacent the opening 32 in order to fixedly locate a sleeve 52 therein. The bearing member terminates in an abutment 54 opposing an abutment 56 on the sleeve to define a groove 58 which receives a first seal 60. The sleeve terminates in an abutment 62 opposing an abutment 64 on the housing wall of the stepped bore to define a groove 66 which receives a second seal 70. The bearing member includes a bore 72 movably receiving a first piston 74 which is coupled to the input rod 12 by suitable means. The diameter of bore 72 defines a dimension intermediate the inner diameter of seal 60 and the outer diameter of seal 60, so that abutment 54 aligns with or opposes seal 60. The sleeve 52 also includes a bore 76 movably receiving a second piston 78 which is substantially U-shaped in cross section. The first piston 74 forms a radially outer surface 80 sealingly engaging the bore 72 and a radially inner surface 82 engaging the first seal 60 so as to define a fast fill or auxiliary chamber 84.

With the first piston 74 engaging seal 60 and the second piston 78 engaging seal 70, the first piston cooperates with the seal 60 to substantially define a first pressure chamber 86 and the second piston cooperates with the seal 70 to substantially define a second pressure chamber 88. The second piston and sleeve are apertured at 90 and 92, respectively, to communicate the first pressure chamber with the outlet 36, while the second pressure chamber 88 communicates directly with the outlet 38.

A pair of O-ring seals 94 and 96 between the sleeve and second piston and wall of bore 30, respectively, seal the first pressure chamber from the port 42. An O-ring seal 98 seals the first pressure chamber from the port 40 while an O-ring seal 100 seals the bearing member to the wall of bore 30.

The relief and replenish valve assembly 46 includes a casing 102 with passages 104 extending from the reservoir to a flexible flapper valve disc 106. A central passage 108 receives a relief ball valve 110 biased by spring 112 against seat 114. The seat is notched as at 116 to permit restricted flow of fluid from the reservoir to the port 40. The central passage 108 is also restricted at 118.

In order to communicate fluid from the reservoir 26 to the auxiliary chamber 84, the abutment 54 of bearing member 50 is provided with radially extending grooves 120 and the sleeve is further apertured at 122 between O-ring seals 98 and 100 so that port 40 leads to the auxiliary chamber 84. A washer 123 is provided between the abutment 54 and the first seal 60 to support the seal. In order to communicate fluid from the reservoir 26 to each pressure chamber, the pistons 74 and 78 are notched or relieved adjacent the seals 60 and 70, respectively, at 124 and 126 to provide a passage from the ports 40 and 42, past the right side of each seal, and through the notches 124 and 126 to the respective pressure chamber.

When a brake application is initiated, the first piston 74 is moved to the left. Fluid disposed within auxiliary chamber 84 is pressurized in response to contraction of the chamber. A portion of the pressurized fluid is returned to the reservoir 26 via restrictions 118 and 116; however, the restriction of seal 60 is less so that a majority of the fluid pressure within auxiliary chamber is communicated past seal 60 to first pressure chamber 86, as soon as said fluid pressure attains a first predetermined pressure level. After a second predetermined pressure level is reached in chamber 84, the ball relief valve is opened to further open communication of fluid pressure from chamber 84 to reservoir 26. The

moving first piston 74 extends into the cavity of the second piston 78 to contract first pressure chamber 86 so that the fluid therein is pressurized to communicate fluid pressure to outlet 36.

A spring 130 between piston 74 and retainer 132 is engageable via retainer 132 with piston 78 so that the moving piston 74 biases the piston 78 to also move to the left. Fluid pressure within chamber 86 also acts against the second piston 78 to bias the latter to the left. As a result the fluid within chamber 88 is pressurized to communicate fluid pressure to outlet 38. The movement of the pistons causes the piston notches 124 and 126 to move to the left of seals 60 and 70, respectively, so that the chambers are isolated from the reservoir.

Upon termination of braking a spring 134 extending between the fixed sleeve and second piston cooperates with the decreased pressure in chamber 86 to bias the second piston to return to the position shown in the drawing. The expanding auxiliary chamber 84 creates a pressure drop within the port 40, so that fluid from the reservoir will flow through the restrictions 114 and 118 as well as open flexible flapper valve disc 106 to communicate fluid also through passages 104, port 40, grooves 120 to chamber 84. Once the pistons return to the rest position shown, the pressure within chamber 84 is equalized with the reservoir so the flexible flapper valve closes. Moreover, the notches 124 and 126 communicate with the ports 40 and 42, respectively, in the rest position, to replenish each pressure chamber 86 and 88 with fluid from the reservoir.

The operation of each seal 60 and 70, which forms no part of the present invention, is more completely described in Applicants' British Patent Application No. 2 017 240.

6

0036367

# C L A I M S

1. A master cylinder of the kind comprising a housing (24) defining a stepped bore (30) therein and a fluid reservoir (26) normally in communication with said bore, a pair of aligned pistons (74,78) slidably disposed within the housing bore and cooperating with a pair of fixed seals (60,70), respectively, to define a pair of pressure chambers (86,88) in fluid communication with respective braking circuits (16,20) of a vehicle, a sleeve (52) disposed within the housing bore and held in engagement with said pair of seals, and a bearing member (50) extending into the housing bore to engage the sleeve in order to fixedly position same within the housing bore as well as one (60) of said seals between said sleeve and bearing member and the other seal (70) between said sleeve and the housing, said bearing member and said sleeve further guiding the first (74) and the second (78) of said pistons, respectively, in their displacements, characterized in that there is provided between the bearing member (50) and the associated first piston (74) an auxiliary chamber (84) which is normally communicated with the fluid reservoir (26) and separated from one (86) of the pressure chambers by said one seal (60), the pressurization of the fluid in said auxiliary chamber by the displacement of said first piston resulting first in closing the communication between this chamber and the fluid reservoir, then in opening communication between same chamber and said one pressure chamber past said one seal when the pressure level reaches a first predetermined value, and finally in re-opening communication between same chamber and the fluid reservoir when the pressure level reaches a second predetermined value.

2. A master cylinder according to claim 1, characterized in that the communication between the auxiliary chamber (84) and the fluid reservoir (26) comprises at least one radially extending groove (120) formed in an end face of the bearing member (50) adjacent said one seal (60), at least one aperture (122) formed in the sleeve (52), and a valve assembly (46) fit to close said communication as soon as the pressure level in the auxiliary chamber exceeds that in the fluid reservoir and to re-open said communication when said pressure level reaches its second predetermined value.

3. A master cylinder according to any of claims 1 and 2, characterized in that said one seal (60) includes at least one lip portion directed towards said one pressure chamber, said lip portion normally resting on the outer surface of said first piston (74) and lifting therefrom when the pressure level in the auxiliary chamber reaches its first predetermined value.

0036367

European Patent Office

**EUROPEAN SEARCH REPORT**

Application number

EP 81 40 0390.1

## DOCUMENTS CONSIDERED TO·BE RELEVANT

| Category | Citation of document with indication, where appropriate, of relevant passages | Relevant to claim |
|---|---|---|
| X,D | GB – A – 2 017 240 (BENDIX) <br> * entire document * <br> & DE – A1 – 2 910 137 <br> –– | 1-3 |
| | GB – A – 2 000 235 (BENDIX) <br> * fig. 1 * <br> –– | 1 |
| | DE – A1 – 2 816 359 (GENERAL MOTORS) <br> * fig. 1, to 5 * <br> –– | 1 |
| A | US – A – 4 086 770 (SHAW) <br> –––– | 1 |

**CLASSIFICATION OF THE APPLICATION (Int. Cl.³)**

B 60 T 11/16

**TECHNICAL FIELDS SEARCHED (Int. Cl.³)**

B 60 T 11/00

**CATEGORY OF CITED DOCUMENTS**

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |

| Place of search | Date of completion of the search | Examiner |
|---|---|---|
| Berlin | 27-05-1981 | LUDWIG |

EPO Form 1503.1 06.78